(19) Europäisches Patentamt
European Patent Office
Office européen des brevets

(11) Veröffentlichungsnummer: **0 309 027 B1**

(12) **EUROPÄISCHE PATENTSCHRIFT**

(45) Veröffentlichungstag der Patentschrift: **07.10.92**

(51) Int. Cl.5: **C03B 37/012**, G02B 6/22

(21) Anmeldenummer: **88201971.4**

(22) Anmeldetag: **09.09.88**

# (54) Verfahren zur Herstellung einer Monomode-Lichtleitfaser.

(30) Priorität: **19.09.87 DE 3731604**

(43) Veröffentlichungstag der Anmeldung:
**29.03.89 Patentblatt 89/13**

(45) Bekanntmachung des Hinweises auf die Patenterteilung:
**07.10.92 Patentblatt 92/41**

(84) Benannte Vertragsstaaten:
**DE ES FR GB IT NL SE**

(56) Entgegenhaltungen:
**EP-A- 0 091 173**
**DE-A- 2 523 401**
**US-A- 4 283 213**

**Patent Abstracts of Japan, unexamined applications, C Field, Band 5, Nummer 136, 28. August 1981, The Patent Office Japanese Government, Seite 12C69, Kokai-Nr. 56-69235 (Nippon Denshin Denwa Kosha)**

(73) Patentinhaber: **Philips Patentverwaltung GmbH**
**Wendenstrasse 35 Postfach 10 51 49**
**W-2000 Hamburg 1(DE)**
(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**
(84) Benannte Vertragsstaaten:
**ES FR GB IT NL SE**

(72) Erfinder: **Geittner, Peter, Dr.**
**Hainbuchenstrasse 19a**
**W-5100 Aachen(DE)**
Erfinder: **Hagemann, Hans-Jürgen, Dr.**
**Leo-Blech-Strasse 7**
**W-5100 Aachen(DE)**
Erfinder: **Lydtin, Hans, Dr.**
**Am Goepelschacht 9**
**W-5190 Stolberg(DE)**

(74) Vertreter: **Koch, Ingo, Dr.-Ing. et al**
**Philips Patentverwaltung GmbH Wendenstrasse 35 Postfach 10 51 49**
**W-2000 Hamburg 1(DE)**

**EP 0 309 027 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur Herstellung einer Monomode-Lichtleitfaser, bei dem eine Vorform mit einem zentralen lichtführenden Kernbereich, einer den Kernbereich umgebenden lichtführenden Mantelschicht und einer die Mantelschicht umgebenden Außenschicht geformt wird, wobei die Materialien des Kernbereichs aus der Gasphase abgeschieden werden, und wobei die Außenschicht in Form eines Rohrs auf die lichtleitende Mantelschicht aufgebracht wird, wonach durch Erhitzen und Ziehen die Monomode-Lichtleitfaser geformt wird.

Verfahren dieser Art sind aus DE-A-2 523 401, DE-A-2 906 523 und US-A-4 283 213 bekannt. Dabei werden die bekannten Verfahren der reaktiven Abscheidung aus der Gasphase (CVD) und der Stab-in-Rohr-Methode angewendet. Bei der Stab-in-Rohr-Methode besteht das Rohr aus nicht lichtführendem Material, d.h. es erfolgt eine Aufdickung mit nicht lichtführendem Material.

Durch "Patent Abstracts of Japan" Band 5, Nr. 136, Seite 12 C 69 (Kokai-Nr. 56-69 235) ist es bekannt, eine äußere Schicht einer Vorform nachträglich als Rohr aufzubringen.

Bei der Herstellung von Monomode-Lichtleitfasern im Produktionsmaßstab werden als CVD-Verfahren das OVD-, das VAD-, das MCVD- und das PCVD-Verfahren angewendet (H. Lydtin "Review On Fiber Manufacturing" J. Lightwave Technology, Vol. LT-4, August 1986, 1016-1038). Gemeinsames Merkmal dieser Verfahren ist es, das gesamte lichtführende Kern- und Mantelmaterial der Faser durch Abscheidung aus der Gasphase - nach vorausgegangener chemischer Umsetzung - herzustellen. Bei den Außenbeschichtungsverfahren OVD und VAD wird nicht lichtführendes äußeres Mantelmaterial ebenfalls direkt aus der Gasphase abgeschieden, während bei den Innenbeschichtungsverfahren MCVD und PCVD die Abscheidung des lichtführenden Materials auf der Innenwand von vorgefertigten Substratrohren aus nicht lichtführendem Material erfolgt. Hieran kann sich die zuvor erwähnte Aufdickung nach der Stab-in-Rohr-Methode anschließen.

Mit den genannten Verfahren lassen sich zwar Lichtleitfasern hoher Bandbreite herstellen, deren Dämpfungen nahe der theoretischen Grenze für die in Betracht kommenden Glas/Dotierungs-Systeme liegen. Für eine wirtschaftliche Massenfertigung von Monomode-Lichtleitfasern sind aber außerdem noch hohe Durchsatzgeschwindigkeiten in allen Verfahrensstufen, hohe Materialausbeuten, eine sehr gute Prozeßbeherrschung (Reproduzierbarkeit!) und die Bereitstellung von Vorformen, die mehrere hundert Kilometer Monomode-Lichtleitfasern enthalten, erforderlich, u.a., um die heute schon erreichten Faserziehgeschwindigkeiten von über 1000 m/min nutzen zu können.

Die Abscheidegeschwindigkeit wird in der Literatur meist als Integralwert über die verschiedenen Materialbereiche der Faser angegeben. Beim OVD-Verfahren werden etwa 10 g/min (lichtführendes und nicht lichtführendes Material) erzielt; ähnlich liegen die Daten für das VAD-Verfahren. Die Vergleichsdaten für MCVD und PCVD liegen mit etwa 2 bis 3 g/min niedriger. Allerdings muß bei einem Vergleich berücksichtigt werden, daß beim PCVD-und MCVD-Verfahren nur die lichtführenden Bereiche abgeschieden werden und daß bei den Außenbeschichtungsverfahren die Abscheidegeschwindigkeiten in diesen Bereichen deutlich unter dem angegebenen Integralwert liegen.

Die Vorformgrößen liegen in der Produktion zwischen 30 und 80 km Faser pro Vorform. Der Realisierung größerer Vorformen stehen bei den im Produktionsmaßstab angewendeten CVD-Verfahren folgende Schwierigkeiten entgegen:

Bei den Außenbeschichtungsverfahren läßt die mechanische Stabilität großer und poröser Vorformen, deren Dichte nur etwa ein Zehntel der theoretischen Dichte beträgt, zu wünschen übrig. Die Trocknungs-, Reinigungs- und Sinterungsanlagen müssen für Grünkörperabmessungen bis zu 2 m Länge und etwa 150 mm Durchmesser ausgelegt werden. Ferner ist eine weitere Erhöhung der Abscheidegeschwindigkeit auf etwa 30 g/min erforderlich, um mit anderen Verfahren zur Herstellung des nicht lichtführenden Materials mithalten zu können.

Bei den Innenbeschichtungsverfahren erfordern Vorformen mit einem Faseräquivalent von etwa 300 km pro Meter Vorform bei Abscheidung der lichtführenden Materialien Abscheidegeschwindigkeiten von etwa 5 g/min und Substratrohre mit Innendurchmessern von etwa 35 bis 40 mm. Große Vorformen erfordern bei der Abscheidung der lichtführenden Materialien Abscheidedicken von mehr als etwa 8 mm, die das MCVD-Verfahren vor Probleme stellen. Dicke Abscheidungen in großen Substratrohren lassen sich mit den bekannten Verfahren nicht kollabieren.

Der Erfindung liegt die Aufgabe zugrunde, den Querschnitt der Vorformen zu vergrößern, ohne die Abscheidegeschwindigkeit und - bei Innenbeschichtungsverfahren - den Kollabieraufwand zu erhöhen.

Diese Aufgabe wird erfindungsgemäß dadurch gelöst, daß im Verfahren der eingangs genannten Art nur ein Teil der lichtführenden Mantelschicht aus der Gasphase abgeschieden wird und das übrige lichtführende Mantelmaterial in Form von Rohren hinzugefügt wird, wobei die Verbindungsflächen durch einen

Ätzvorgang vorbehandelt werden.

Um die wirtschaftliche Massenfertigung von Monomode-Lichtleitfasern zu fördern, wird höchstens ein Fünftel des lichtführenden Materials aus der Gasphase abgeschieden. Je nach der Ausdehnung von Kern und lichtführendem, gegebenenfalls strukturiertem Mantel der Faser wird der Anteil des abgeschiedenen Materials sogar auf weniger als ein Fünfzigstel des lichtführenden Materials beschränkt.

Wenn Innenbeschichtungsverfahren wie PCVD oder MCVD angewendet werden, wird als Substratschicht für die Gasphasenabscheidung vorzugsweise ein Rohr aus für die Führung des Lichts geeignetem dotiertem oder undotiertem Mantelmaterial eingesetzt.

Dabei ist es von Vorteil, möglichst dünnwandige Rohre einzusetzen, so daß der Anteil dieser Rohre höchstens ein Fünftel des lichtführenden Materials ausmacht. Dadurch wird der Anteil des zu kollabierenden Materials gering gehalten, was für die Wirtschaftlichkeit des gesamten Verfahrens überaus günstig ist.

Das aus der Gasphase abgeschiedene Material wird, gegebenenfalls zusammen mit der Substratschicht, zu einem kompakten Stab geformt.

Die restlichen mindestens drei Fünftel des lichtführenden Materials werden in Form von Rohren um den Stab herum angebracht. Dies hat den Vorteil, daß mindestens drei Fünftel des lichtführenden Materials weder abgeschieden noch gegebenenfalls kollabiert werden müssen. Je nach dem gewünschten Faseraufbau kann man in vielen Fällen den in Form von Rohren hinzugefügten Anteil des lichtführenden Materials sogar auf mehr als neun Zehntel steigern.

Eine weitere vorteilhafte Ausgestaltung des erfindungsgemäßen Verfahrens besteht darin, daß als lichtführendes Material dotiertes oder undotiertes $SiO_2$-Glas verwendet wird.

Die Vorteile des erfindungsgemäßen Verfahrens werden insbesondere dann bedeutsam, wenn die Querschnittsfläche des aus der Gasphase abgeschiedenen Kernmaterials relativ groß, z.B. zwischen 10 und 100 $mm^2$, gewählt wird, um eine große Vorform für mehrere hundert Kilometer Monomode-Lichtleitfaser herzustellen, weil dann die Menge des in Form von Rohren hinzugefügten lichtführenden Materials entsprechend groß wird.

Um eine Belegung der Grenzflächen im lichtführenden Material mit OH-Gruppen, Wasser und anderen Verunreinigungen zu vermeiden, werden die Oberflächen der Rohre und des kompakten Stabes mit einem strömenden gasförmigen Ätzmittel und einer lokalisierten Plasmazone geätzt, wobei zwischen den Oberflächen und einer plasmaerregenden Vorrichtung eine Relativbewegung erfolgt. Ein derartiges Ätzverfahren ist in EP-B-0 091 173 beschrieben.

Eine andere Ausführungsform des Ätzverfahrens nach der Erfindung ist dadurch gekennzeichnet, daß ein Plasma die Oberflächen der Rohre und des kompakten Stabes ganz überdeckt und zeitlich gepulst wird und das gasförmige Ätzmittel ständig oder gepulst zu- und abgeführt wird.

Als Ätzmittel wird eine Mischung von Sauerstoff mit einem Gas zugeleitet, dessen Moleküle Halogenatome enthalten. Als Halogene kommen in erster Linie Fluor und Chlor in Betracht. Als weitere Bestandteile der Moleküle kommen Kohlenstoff, Schwefel und Sauerstoff in Frage neben anderen Elementen, die nach der Reaktion mit den Atomen der Glasoberfläche leicht flüchtige und relativ stabile Verbindungen bilden. Beispiele für geeignete Gase sind insbesondere $CF_4$, $C_2F_6$, $C_3F_8$, $C_4F_{10}$, $CCl_3F$, $CCl_2F_2$ und $SOCl_2$. Das Mischungsverhältnis des Sauerstoffes zur Gesamtheit der halogenhaltigen Gase soll im Bereich 1:1 bis etwa 50:1 liegen.

Der Druck im Ätzvolumen wird im Bereich 1 bis 50 hPa, vorzugsweise im Bereich 10 bis 25 hPa gewählt. Die Temperatur im Ätzvolumen auf Grund von äußeren Wärmequellen soll 900 °C nicht übersteigen, vorzugsweise wird sie sogar auf Temperaturen unter 400 °C beschränkt und insbesondere nicht über die Raumtemperatur angehoben.

Unter diesen Druck- und Temperaturbedingungen sind die gasförmigen Ätzmittel stabil. Die Zuleitungen werden nicht angegriffen und Reaktionen mit der Oberfläche treten ohne Plasma nicht auf.

Um das Ätzen zu induzieren, wird als Plasma vorzugsweise eine Niederdruck-Gasentladung angewendet, die mit Hilfe eines Applikators aufrechterhalten wird, der im Ätzvolumen keine Elektroden besitzt, vorzugsweise mit einem Mikrowellenapplikator. Bei den angegebenen Drucken und typischen in das Plasma eingekoppelten Leistungen von einigen hundert Watt bis zu einigen Kilowatt bleibt die Ausdehnung der Plasmazone im wesentlichen auf den Bereich des Applikators beschränkt. Die Gasversorgung und -entsorgung wird nun so eingerichtet, daß das Gas, das als Ätzmittel dient, an einer Seite in das Plasma einströmt, und daß die Reaktionsprodukte auf einer anderen Seite abgepumpt werden. Die Aktivierung des Ätzmittels findet unmittelbar beim Eintritt in das Plasma statt.

Die aktivierten Spezies diffundieren zur Glasoberfläche, reagieren mit der Glasoberfläche und bewirken so die gewünschte Reinigung.

Nach dem Austritt aus dem Bereich der Gasentladung entstehen wiederum überwiegend stabile, gasförmige Verbindungen, die mit der Strömungsrichtung des Gases aus dem zu reinigenden Volumen

herausgeschafft werden.

Durch die Ausführung einer gleichförmigen Relativbewegung zwischen der plasmainduzierenden Vorrichtung und der Glasoberfläche mit einer Geschwindigkeit, die klein ist im Vergleich zu der des strömenden Gases, wird das auf den Plasmabereich lokalisierte Ätzen gleichmäßig auf die ganze Oberfläche des Glases angewandt und diese dadurch homogen gereinigt.

Wegen der Bewegung des Plasmas wirkt die vom Plasma dissipierte Energie nur verkürzt auf jedes Element der Glasoberfläche ein. Dadurch läßt sich vermeiden, daß die Temperatur der Oberfläche unzulässig ansteigt. Dies ist deshalb wichtig, weil sonst Verunreinigungen der Oberfläche und insbesondere Wasser, OH-Gruppen und einwertige Ionen, wie Cu und Na, in das Innere des Glases eindiffundieren könnten.

Auch wenn die Produkte der Reinigungsreaktion weitgehend stabil und gasförmig sind, so gelangt doch ein Teil dieser Moleküle stromabwärts auf die Oberfläche und kann dort adsorbiert werden. Auch kann eine Clusterbildung der Produktmoleküle nach dem Verlassen des Plasmas mit anschließender Abscheidung auf der Oberfläche stattfinden. Diese Nachteile und Gefahren für eine vollständige Oberflächenreinigung werden dadurch vermieden, daß die Relativbewegung oder zumindest die letzte Relativbewegung in einem gegebenen Oberflächenbereich vorzugsweise in bzw. mit der Richtung des Gasstromes erfolgt. Dabei werden gegebenenfalls aufgetretene Niederschläge aus der Ätzreaktion in einem weiter zum Gaseinlaß gelegenen Oberflächenteil wieder entfernt und auf diese Weise alle Verunreinigungen und Oberflächenbelegungen sukzessive und vollständig zum Gasauslaß transportiert.

Wie bereits erwähnt, wird das Problem der Reinigung von Glasoberflächen erfindungsgemäß auch dadurch gelöst, daß zur Reinigung ein Plasma, d.h. eine Gasentladung verwendet wird, das bzw. die die zu reinigenden Oberflächen ganz überdeckt. Dabei brennt das Plasma, z.B. eine Niederdruck-Gasentladung, nicht kontinuierlich, sondern wird in der Weise gepulst betrieben, daß eine gleichmäßige Reinigung erzielt wird, ohne daß die Temperatur der Glasoberflächen über höchstens 800 °C ansteigt. Die homogene Reinigung wird dadurch erreicht, daß während der Zeiten, zu denen kein Plasma brennt, ein vollständiger Austausch der Produkte der Ätzreaktion gegen das unreagierte Ätzgas erfolgt. Hierbei ist es zunächst unerheblich, ob das Ätzgas kontinuierlich strömt, oder ob Gas zugeführt, mit Hilfe der Gasentladung ohne Strömung zur Reaktion gebracht und dann abgepumpt wird. Welche Betriebsart vorteilhafter ist, hängt vom speziellen Charakter der Reinigungsaufgabe und den Prozeßbedingungen ab, z.B. Strömungsgeschwindigkeit des Gases, dissipierte Leistung der Entladung und Druck.

Unter bestimmten Bedingungen - z.B. in allen 3 Dimensionen große Reaktionsräume - ist es auch möglich, die Reinigung statt mit einer Niederdruckentladung mit einem isothermen Hochdruckplasma zu bewerkstelligen. Solch ein Fall kann beispielsweise vorliegen, wenn Quarzrohre mit einem großen Innendurchmesser mit Hilfe eines lokalisierten Plasmas, das relativ zum Rohr bewegt wird, gereinigt werden.

Die Erfindung wird an Hand einer Zeichnung und einiger Ausführungsbeispiele näher erläutert.

Die einzige Figur der Zeichnung zeigt eine Monomode-Lichtleitfaser im Querschnitt.

Die Figur läßt 3 Kreiszonen $\alpha$, $\beta$ und $\gamma$ erkennen, von denen die Zone $\beta$ nochmals in die Teilgebiete $\beta_1$, $\beta_2$ und $\beta_3$ unterteilt ist.

Die Zone $\alpha$ markiert den zentralen lichtführenden Kernbereich, der bei Monomode-Fasern einen Durchmesser von 10 bis 15 $\mu$m hat, hochrein sein muß und dessen Brechzahl, abhängig vom Fasertyp, eine Funktion des Radius ist. Bei Monomode-Fasern macht der (gegebenenfalls strukturierte) Kernmaterialanteil $\alpha$ etwa 1 bis 2% der gesamten Fasermasse aus.

Die an $\alpha$ grenzende Zone $\beta$ stellt den lichtführenden Mantelbereich dar; diese Zone hat einen äußeren Durchmesser von 50 bis 60 $\mu$m und muß ebenfalls hochrein sein, da in ihr noch etwa 15 bis 20% der Lichtenergie geführt wird. Die Reinheitsanforderungen sind jedoch nicht ganz so scharf wie in der Zone $\alpha$ , da die Lichtenergie von der Grenzfläche zwischen den Zonen $\alpha$ und $\beta$ nach außen schnell abnimmt. Im Gegensatz zum Kernbereich besteht das Material des lichtführenden Mantelbereiches jedoch durchgehend aus reinem oder dotiertem $SiO_2$-Glas, d.h. aus einem Glas mit konstanter, ortsunabhängiger Zusammensetzung. Die gestrichelten Linien innerhalb von $\beta$ sind zum besseren Verständnis der Erfindung angebracht. Sie unterteilen das hochreine, lichtführende Mantelmaterial in drei Bereiche $\beta_1$, $\beta_2$ und $\beta_3$, die sich bezüglich ihrer Zusammensetzung nicht unterscheiden.

Der prozentuale Massenanteil des lichtführenden Mantels $\beta/(\alpha+\beta+\gamma)$ 100 liegt bei etwa 20%.

Der äußere Mantelbereich $\gamma$ hat in der Faser einen Durchmesser von 125 $\mu$m, trägt im wesentlichen zur Faserfestigkeit und zur Verminderung von äußeren Dämpfungsursachen bei und hat einen Massenanteil $\gamma/(\alpha+\beta+\gamma)$ 100 von etwa 80%. Die Reinheitsforderungen an dieses Material sind bezüglich des OH-Gehaltes und der meisten anderen Verunreinigungen unkritisch, da es nicht zur Lichtführung dient. Aus Gründen der Korrosionsbeständigkeit und Festigkeit sollte dieses Material in seiner Zusammensetzung jedoch möglichst "quarznah" liegen, d.h. aus reinem bzw. schwach dotiertem $SiO_2$-Glas bestehen.

Wesentliches Merkmal der Erfindung ist die Herstellung des lichtführenden Kernbereichs $\alpha$ und gegebenenfalls eines kleinen Teils $\beta_1$ des lichtführenden Mantelbereichs $\beta$ mit Hilfe eines der CVD-Verfahren ($r\beta_1/r\alpha \leqq 2$, r = Radius) und die Aufdickung mit den Bereichen $\beta_2$, $\beta_3$ und $\gamma$ mit Hilfe von vorgefertigten Rohren.

Bei der Anwendung der VAD- und OVD-Verfahren entfällt der Bereich $\beta_2$.

Bei der Anwendung der MCVD- und PCVD-Verfahren erfolgt die Innenbeschichtung in einem möglichst dünnwandigen und hochreinen Substratrohr (Material $\beta_2$). Falls das Material $\alpha$ im Brechungsindex strukturiert werden muß, sollte die Beschichtung vorzugsweise mit dem PCVD-Verfahren erfolgen.

Das erfindungsgemäße Verfahren ermöglicht die Herstellung großer Vorformen für Monomode-Lichtleitfasern, ohne auf eine weitere Steigerung von Abscheidegeschwindigkeiten und ohne auf die Entwicklung eines Kollabierverfahrens für große Rohre (MCVD, PCVD) oder die Handhabung großer poröser Vorformen (OVD, VAD) angewiesen zu sein.

Für die Durchführung des erfindungsgemäßen Verfahrens werden hochreine dotierte oder undotierte Substratrohre mit Innendurchmessern zwischen 15 und 25 mm benötigt. Die Herstellung derartiger Rohre ist von M. Toki, S. Miyashita, T. Takendi, S. Kambe und A. Kodi (Seiko Epson Corp.) in Glass Nr. 4 (1987) S. 125 ff beschrieben und in EP-A-0 249 278, 0 265 023 und 0 276 886, die unter Art. 54 (3) EPÜ fallen, vorgeschlagen worden.

Ein wesentlicher Vorteil der Erfindung ist bei den Innenbeschichtungsverfahren, daß der zu kollabierende Faseranteil von etwa 30 bis 40% (Stand der Technik) auf etwa 5% zurückgeht. Hierdurch können die Kollabierzeiten und die hiervon abhängigen Verdampfungsverluste und Profilstörungen erheblich reduziert werden. Das an der fertigen Vorform noch fehlende lichtführende Mantelmaterial $\beta_3$ und das Umhüllungsmaterial $\gamma$ wird nach dem Kollabierschritt aus passend dimensionierten Rohren mit Hilfe der Stab-in-Rohr-Technik zusammengefügt.

Mit dieser erfindungsgemäßen Verfahrensweise und unter Anwendung an sich bekannter Techniken (PCVD, MCVD, Kollabieren, Stab-in-Rohr) lassen sich problemlos Vorformen mit etwa 300 km Faserlänge und darüber herstellen. Entsprechendes gilt für die Anwendung von VAD und OVD.

Beispiel 1

Es wurden Vorformen für Monomode-Lichtleitfasern mit einem Durchmesser des lichtleitenden Kerns in der Faser von 10 µm und einer Erhöhung des Brechungsindex im Kern von etwa 0,3% hergestellt. Die Vorformen wurden so konzipiert, daß 160 km Faser pro Meter Vorform herstellbar waren.

Die Vorformen wurden mit Hilfe von zwei Verfahrensweisen hergestellt:

a)gemäß dem Stand der Technik durch Abscheidung von Quarz und dotiertem Quarz äquivalent zu 10 µm Kerndurchmesser und 60 µm Durchmesser des optischen Mantels bei der Faser. Die Abscheidung wurde mit dem PCVD-Verfahren in einem handelsüblichen Substratrohr (Fa. Heraeus Hanau, Typ Heralux WG aus Naturquarz; typische Verunreinigungen: 150000 ppb OH, 2000 ppb Ca, 100 ppb Fe, 100 ppb Sb. 1 ppb X bedeutet 1 ng X pro g $SiO_2$) mit einem Außendurchmesser von 35 mm und einer Wandstärke von 2 mm unter folgenden Bedingungen vorgenommen:

Sauerstofffluß 3000 sccm $SiCl_4$-Fluß 746 sccm, $GeCl_4$-Fluß (SM Kern) 40 sccm, Mikrowellenleitung 4 kW, Beschichtungslänge 100 cm, Hubgeschwindigkeit 15 m/min. Dabei bedeutet sscm $cm_3$/min, bezogen auf Standardbedingungen (0 °C, 1013 hPa).

Das Überfangrohr für den Stab-in-Rohr-Verfahrensschritt hatte einen Innendurchmesser von 31 mm und einen Außendurchmesser von 52 mm.

b) gemäß dem erfindungsgemäßen Verfahren durch Abscheidung nur des Kernmaterials (entsprechend 10 µm in der Faser) in einem hochreinen Substratrohr (selbst hergestellt; typische Verunreinigungen: 300 ppb OH, etwa 200 ppb Na, etwa 150 ppb Ca, < 15 ppb Fe, < 5 ppb Cr, < 2 ppb Cu), das einen Außendurchmesser von 17 mm und eine Wandstärke von 1 mm hatte. Die Abscheidung erfolgte unter folgenden PCVD-Bedingungen:

Sauerstofffluß 745 sccm, $SiCl_4$-Fluß 186 sccm, $GeCl_4$-Fluß 10 sccm, Mikrowellenleistung 1 kW, Beschichtungslänge 100 cm, Hubgeschwindigkeit 7 m/min.

Der Außendurchmesser der kollabierten Vorform betrug etwa 9 mm. Für die Stab-in-Rohr-Verfahrensschritte wurden ein hochreines Überfangrohr ($\beta_2$-Bereich) von 12 mm Innendurchmesser und 25 mm Außendurchmesser und ein normales Überfangrohr ($\gamma$-Bereich) von 27 mm Innendurchmesser und etwa 52 mm Außendurchmesser verwendet.

Im Fall a) war es erforderlich, eine Querschnittsfläche von 450 $mm^2$ PCVD-Quarz abzuscheiden (Dicke etwa 6 mm). Mit den verwendeten Substratrohren, die von einem Anfangsinnendurchmesser von 31 mm in Laufe der Beschichtung auf 19 mm zuwuchsen, ließ sich eine mittlere Abscheiderate von maximal etwa 2

g/min realisieren. Das bedeutet, daß eine PCVD-Beschichtungszeit von etwa 8 Stunden zur Herstellung einer Vorform der Länge Z = 1 m erforderlich war:
$t^{PCVD}Z$ = 5 min/cm
Um diese Vorform mit einer Gesamtquerschnittsfläche von 660 $mm^2$ (Beschichtung und Substrat) zu kollabieren, mußte eine Zeit von 25 Stunden aufgewendet werden:
$t^{koll}/Z$ = 15 min/cm
Um diese Vorform weiter zu Fasern mit einem Außendurchmesser von 125 µm zu verarbeiten, war eine Aufdickung mit Hilfe der normalen Stab-in-Rohr-Technik auf einen Außendurchmesser von 52 mm entsprechend einem effektiven Querschnitt von 2000 $mm^2$ Quarz erforderlich.

Im Fall b) war wegen der Beschränkung auf den lichtführenden Kern lediglich die Abscheidung von 12,6 $mm^2$ Querschnittsfläche mit Hilfe des PCVD-Verfahrens nötig. Dabei ergab sich eine Vorform mit einer Gesamtquerschnittsfläche von etwa 60 $mm^2$ bei einer abgeschiedenen Dicke des dotierten PCVD-Quarzes von etwa 0,25 mm. Diese Abscheidung ließ sich bei einer konstanten Abscheiderate von 0,5 g/min bewerkstelligen. Für die Beschichtung eines 1 m langen Substratrohres wurde also etwa 1 Stunde benötigt:
$t^{PCVD}/Z$ = 0,56 min/cm
Der Effektivitätsgewinn beim Kollabieren fällt trotz des in diesem Beispiel noch recht hohen Anteils des Substratrohrmaterials ($m^{substr}/m^{PCVD} \approx 5$) noch drastischer aus:
$t^{koll}/Z$ = 1 min/cm
Insgesamt waren also zur Herstellung der Vorform von 1 m Länge nur etwa 2,5 Stunden Beschichtungs- und Kollabierzeit aufzuwenden, um nach dem Aufdicken mit Hilfe der Stab-in-Rohr-Technik - die selber nicht zeitaufwendig ist - eine dem Fall a) völlig analoge Vorform herzustellen.

In diesem Beispiel betrug der Zeitaufwand für Beschichtung und Kollabieren mit dem erfindungsgemäßen Verfahren also lediglich etwa 7% der Zeit, die mit einem Innenbeschichtungsverfahren nach dem Stand der Technik aufgewendet werden mußte.

Es kommt hinzu, daß die Menge des Quarzes, die mit einem CVD-Verfahren abgeschieden werden mußte, im Fall b) lediglich etwa 3% der Menge betrug, die bei Verfahren nach dem Stand der Technik abzuscheiden war.

Beispiel 2

Das Beispiel bezieht sich auf die Herstellung von Lichtleitfasern mit Hilfe des PCVD-Verfahrens, wobei die Substratrohre mit einem Außendurchmesser von etwa 26 mm und einer Wanddicke von etwa 4 mm aus vorgefertigtem hochreinem Quarz bestehen. Die Substratrohre wurden mit etwa 35 µm undotiertem $SiO_2$ und etwa 20 µm mit etwa 3,5 mol% $GeO_2$ dotiertem $SiO_2$ beschichtet. Die beschichteten Substratrohre wurden zu Stäben kollabiert und aus den Stäben wurden Lichtleitfasern mit einem Durchmesser von 125 µm gezogen. Folglich hatte der Kern dieser Lichtleitfasern einen Durchmesser von etwa 11 µm mit einem Brechungsindex, der um etwa 0,27 % höher war als der des umgebenden Quarzglases.

Eine Faserserie N wurde mit Hilfe des üblichen PCVD-Verfahrens hergestellt: Das Substratrohr wurde naßchemisch geätzt, gespült, getrocknet und auf der Beschichtungsanlage eingespannt. Das Innenvolumen wurde bei strömendem, trockenem Sauerstoff abgepumpt, die Substratrohrtemperatur wurde auf etwa 1200 °C erhöht und dann wurde zunächst undotiertes $SiO_2$ (Schichtdicke 35 µm) und anschließend Ge-dotiertes $SiO_2$ (Schichtdicke 20 µm) abgeschieden.

Bei einer Faserserie R wurde zusätzlich vor dem Erhöhen der Substratrohrtemperatur das erfindungsgemäße Reinigungsverfahren angewendet:
Als Ätzgas wurde ein Gemisch von Sauerstoff und Freon, $C_2F_6$, verwendet. Die Flüsse waren 90 sccm $O_2$ und 10 sccm $C_2F_6$, und der Druck wurde auf 10 hPa eingestellt. Als plasmaerregende Vorrichtung diente ein koaxialer Mikrowellenresonator. Die Mikrowellenleistung von 900 W wurde mit Hilfe eines bei etwa 2450 Hz arbeitenden Dauerstrichmagnetrons zugeführt. Der Mikrowellenresonator und folglich auch das im Innern des Substratrohres brennende Plasma wurden mit einer Geschwindigkeit von 25 cm/sec etwa 200 mal entlang dem zu beschichtenden Substratrohr hin- und herbewegt.

Die Fasern der Serien R und N wurden hinsichtlich ihrer optischen Verluste vermessen.

Die Verluste auf Grund von Lichtstreuung unterschieden sich bei den beiden Serien nicht signifikant und entsprachen weitgehend denen von bekannten Monomode-Lichtleitfasern mit einem $GeO_2$-dotierten Kern. Beide Serien unterschieden sich jedoch erheblich bezüglich der Zusatzverluste auf Grund von OH-Absorptionsbanden. Innerhalb des für Lichtleitfasern relevanten Wellenlängenbereichs von etwa 800 nm bis etwa 1600 nm ist die Absorption bei etwa 1380 nm die relativ stärkste OH-Bande. Diese wird deshalb zum Vergleich der beiden Faserserien herangezogen:
Dämpfung aufgrund der 1380 nm-OH-Bande:

| | |
|---|---|
| Faserserie N | 900 dB/km± 30% |
| Faserserie R | 6 dB/km± 15 % |

Der Vergleich zeigt, daß die Reinigung der Innenoberfläche des Quarz-Substratrohres dort anwesende Belegungen mit $H_2O$ und OH wirksam entfernt. Berücksichtigt man die Diffusion von OH-Verunreinigungen während der Hochtemperaturschritte bei der Faserherstellung, so kann man davon ausgehen, daß OH-Quellen, deren radiale Position sich auf Faserradien zwischen O (Zentrum) und etwa 10 µm transformiert, in diesem Zentralbereich der Faser praktisch gleichmäßig verteilt sind.

Daraus läßt sich die Effektivität des erfindungsgemäßen Reinigungsschrittes abschätzen:
Einer OH-Dämpfung von 40 dB/km bei 1380 nm entspricht ein mittlerer OH-Gehalt im lichtführenden Bereich der Faser von etwa 1 ppm (1 µg OH pro 1 g $SiO_2$), vergl. J.E. Shelbey, J. Vikto Jr., R.E. Benner, J. Am. Ceram. Soc. 65 (1982) C 59. Daraus ergibt sich, daß der mittlere OH-Gehalt im zentralen Bereich bei Fasern der Serie N etwa 20 ppm und bei den Fasern der Serie R nur etwa 0,15 ppm beträgt.

Der Vergleich zeigt, daß die 20 ppm OH bei der Serie N ganz überwiegend von der Belegung der Innenoberfläche mit Wasser herrühren.

Beispiel 3

Es wurden Kombinationen von Quarzrohren und Rohr-Stab-Kombinationen gereinigt. Folgende Kombinationen wurden getestet:

a)Ein Quarzstab mit einem Durchmesser von 12 mm aus hochreinem, OH-freiem Quarz wurde konzentrisch in einem Quarzrohr von normaler Substratqualität (Heraeus WG, OH-Gehalt etwa 200 ppm) mit einem Außendurchmesser von 26 mm und einer Wanddicke von 1,5 mm montiert.

b) Ein hochreines Substratrohr mit einem Außendurchmesser von 17 mm und einer Wandstärke von etwa 1,0 mm wurde konzentrisch in einem Quarzrohr mit einem Außendurchmesser von 26 mm und einer Wandstärke von 1,5 mm angebracht, wobei beide Rohre separat an die Gasversorgung und an die Pumpe angeschlossen wurden.

c) Eine Vorform mit einem Durchmesser von etwa 9 mm, die durch Kollabieren eines hochreinen Substratrohres mit einer PCVD-Innenbeschichtung hergestellt wurde, wurde in einem hochreinen Quarzrohr mit einem Außendurchmesser von 26 mm und einer Wandstärke von 7 mm montiert, wobei das Rohr an die Gasversorgung und die Pumpe angeschlossen wurde.

Die Kombinationen wurden naßchemisch geätzt, gespült, getrocknet und auf der Beschichtungsanlage eingespannt. Mit einer Reihe von Experimenten wurde die Wirkung des erfindungsgemäßen Reinigungsverfahrens untersucht, wobei die plasmaerregende Vorrichtung ein koaxialer Mikrowellenresonator war, der konzentrisch außerhalb der Stab-Rohr-Kombinationen bzw. der Rohrkombination angeordnet war.

Im Fall a) und c) wurde der Druck in dem Spalt zwischen Stab und Rohr auf 20 hPa bei strömendem Ätzgas vermindert. Das die Ätzung induzierende Plasma brannte bei Zuführung von Mikrowellenenergie dann in diesem Spalt.

Als Ätzgas diente ein Gemisch von $O_2$ und $C_2F_6$. Das Mischungsverhältnis wurde von 5:1 bis 20:1 $O_2$ zu $C_2F_6$ variiert, der Gesamtfluß

$$Q_{O_2} + Q_{C_2F_6}$$

wurde von 50 sccm bis 400 sccm, der Druck von 7 hPa bis 20 hPa und die Plasmaleistung von 600 W bis 1500 W variiert. Der Mikrowellenresonator wurde mit einer Geschwindigkeit von 25 cm/sec über dem Ätzvolumen hin- und herbewegt. Durch Messung des Gewichtsverlustes nach 7, 15 und 30 Minuten Ätzzeit wurde festgestellt, daß je 100 $C_2F_6$-Moleküle, die zugeführt wurden, 165 $SiO_2$-Moleküle von der Glasoberfläche entfernt wurden, daß der Ätzangriff gleichmäßig über die Länge der geätzten Zone (gleich Hublänge der Hin- und Herbewegung) war, und daß der Gewichtsverlust sich entsprechend den Querschnittsflächen auf das Rohr und den Stab verteilte.

Im Fall a) wurde nach der Reinigung der Stab- und der Rohrinnenoberfläche eine Beschichtung mit F-dotiertem Quarz mit Hilfe des PCVD-Verfahrens vorgenommen, die Stab-Rohr-Kombination zu einem Stab kollabiert und so eine Vorform hergestellt.

Im Fall c) wurde das äußere Quarzrohr nach der Oberflächenreinigung an den Vorformenden auf die Vorform aufkollabiert und anschließend nach dem Anbringen weiterer Überfangrohre normaler Qualität (z.B. Heraeus WG, Naturquarz) nach der Stab-in-Rohr-Technik zu einer Vorform von 60 cm Länge

(Faseräquivalent etwa 100 km) verarbeitet.

Im Fall b) sollte das innere Rohr mit Hilfe des PCVD-Verfahrens beschichtet werden, wobei beide Oberflächen dieses Rohres nach dem erfindungsgemäßen Verfahren zu reinigen waren und während der PCVD-Beschichtung sauber zu halten waren. Die Reinigung wurde nacheinander im Innenrohr und im Spalt zwischen beiden Rohren dadurch bewerkstelligt, daß zunächst der Druck im Innenrohr auf 10 hPa abgesenkt wurde, während der Druck im Spalt im Bereich von 1000 hPa gehalten wurde. Dadurch wurde bei der Zuführung von Mikrowellenleistung ein Plasma nur im Innern erregt, wo dann die Reinigung durch Plasmaätzen erreicht wurde. Anschließend wurden die Druckverhältnisse umgekehrt und der Spaltbereich mit Hilfe des Plasmas gereinigt.

In allen Fällen konnten die Oberflächen homogen geätzt und gereinigt werden.

**Patentansprüche**

1. Verfahren zur Herstellung einer Monomode-Lichtleitfaser, bei dem eine Vorform mit einem zentralen lichtführenden Kernbereich, einer den Kernbereich umgebenden lichtführenden Mantelschicht und einer die Mantelschicht umgebenden Außenschicht geformt wird, wobei die Materialien des Kernbereichs aus der Gasphase abgeschieden werden, und wobei die Außenschicht in Form eines Rohrs auf die lichtleitende Mantelschicht aufgebracht wird, wonach durch Erhitzen und Ziehen die Monomode-Lichtleitfaser geformt wird,
dadurch gekennzeichnet, daß nur ein Teil der lichtführenden Mantelschicht aus der Gasphase abgeschieden wird und das übrige lichtführende Mantelmaterial in Form von Rohren hinzugefügt wird, wobei die Verbindungsflächen durch einen Ätzvorgang vorbehandelt werden.

2. Verfahren nach Anspruch 1,
dadurch gekennzeichnet, daß höchstens ein Fünftel des Materials der lichtführenden Mantelschicht aus der Gasphase abgeschieden wird.

3. Verfahren nach Anspruch 1 oder 2,
dadurch gekennzeichnet, daß als Substratschicht für die Gasphasenabscheidung ein Rohr aus für die Führung des Lichts geeignetem dotiertem oder undotiertem Mantelmaterial eingesetzt wird.

4. Verfahren nach Anspruch 3,
dadurch gekennzeichnet, daß höchstens ein Fünftel des Materials der lichtführenden Mantelschicht in Form des als Substratschicht dienenden Rohres hinzugefügt wird.

5. Verfahren nach einem der Ansprüche 1 bis 4,
dadurch gekennzeichnet, daß das aus der Gasphase abgeschiedene Material, gegebenenfalls zusammen mit der Substratschicht, zu einem kompakten Stab geformt wird.

6. Verfahren nach einem der Ansprüche 1 bis 5,
dadurch gekennzeichnet, daß für die lichtführende Mantelschicht dotiertes oder undotiertes $SiO_2$-Glas verwendet wird.

7. Verfahren nach einem der Ansprüche 1 bis 6,
dadurch gekennzeichnet, daß die Verbindungsflächen mit einem strömenden gasförmigen Ätzmittel und einer lokalisierten Plasmazone geätzt werden, wobei zwischen den Verbindungsflächen und einer plasmaerregenden Vorrichtung eine Relativbewegung erfolgt.

8. Verfahren nach einem der Ansprüch 1 bis 6,
dadurch gekennzeichnet, daß ein Plasma die Verbindungsflächen ganz überdeckt und zeitlich gepulst wird und ein gasförmiges Ätzmittel ständig oder gepulst zu- und abgeführt wird.

9. Verfahren nach Anspruch 7 oder 8,
dadurch gekennzeichnet, daß das Ätzmittel aus $O_2$ und Molekülen besteht, die Halogenatome enthalten.

10. Verfahren nach Anspruch 9,
dadurch gekennzeichnet, daß die halogenhaltigen Moleküle C, F, Cl oder S enthalten.

**11.** Verfahren nach Anspruch 9,
dadurch gekennzeichnet, daß die halogenhaltigen Moleküle $CF_4$, $C_2F_6$, $C_3F_8$, $C_4F_{10}$, $CCl_3F$, $CCl_2F_2$ oder $SOCl_2$ sind.

**12.** Verfahren nach Anspruch 9,
dadurch gekennzeichnet, daß das Verhältnis von Sauerstoff zu den anderen Komponenten des Gemisches zwischen 1:1 und 50:1 liegt.

**13.** Verfahren nach Anspruch 7 oder 8,
dadurch gekennzeichnet, daß der Ätzvorgang bei einem Druck von 1 bis 50 hPa, insbesondere bei einem Druck zwischen 10 und 25 hPa, durchgeführt wird.

**14.** Verfahren nach einem der Ansprüche 7 bis 13,
dadurch gekennzeichnet, daß das Plasma mit Hilfe eines Mikrowellenapplikators erregt wird.

**15.** Verfahren nach Anspruch 7,
dadurch gekennzeichnet, daß die Relativbewegung in Richtung des strömenden Gases erfolgt.

**16.** Verfahren nach einem der Ansprüche 7 bis 15,
dadurch gekennzeichnet, daß der Gasdurchsatz zwischen 10 und 550 sccm liegt.

**17.** Verfahren nach Anspruch 7,
dadurch gekennzeichnet, daß das Ätzmittel stromaufwärts nahe an das Plasma herangeführt wird und die Reaktionsprodukte stromabwärts hinter dem Plasma abgesaugt werden.

## Claims

**1.** A method of manufacturing a monomode optical fibre, in which a preform having a central light-conducting core area, a light-conducting cladding layer surrounding the core area and an outer layer enveloping the cladding layer is formed, in which the materials of the core area are deposited from the gas phase and the outer layer is provided in the form of a tube on the light-conducting cladding layer after which the monomode optical fibre is formed by heating and drawing, characterized in that only a part of the light-conducting cladding layer is deposited from the gas phase and the other light-conducting cladding material is added in the form of tubes, the contact areas being pretreated in an etching process.

**2.** A method as claimed in Claim 1, characterized in that at most one fifth of the material of the light-conducting cladding layer is deposited from the gas phase.

**3.** A method as claimed in Claim 1 or 2, characterized in that a tube of a doped or undoped cladding material which is suitable for guiding the light is used as a substrate layer for the gas phase deposition.

**4.** A method as claimed in Claim 3, characterized in that at most one fifth of the material of the light-conducting cladding layer is added in the form of the tube serving as a substrate layer.

**5.** A method as claimed in one of the Claims 1 to 4, characterized in that the material deposited from the gas phase is formed into a compact rod, optionally together with the substrate layer.

**6.** A method as claimed in one of the Claims 1 to 5, characterized in that doped or undoped $SiO_2$ glass is used for the light-conducting cladding layer.

**7.** A method as claimed in one of the Claims 1 to 6, characterized in that the contact faces are etched with a flowing gaseous etchant and a localised plasma zone, a relative movement occurring between the contact faces and a plasma-exciting device.

**8.** A method as claimed in one of the Claims 1 to 6, characterized in that a plasma fully covers the contact faces and is temporarily pulsated, while a gaseous etchant is supplied and removed constantly or in a pulsated manner.

9. A method as claimed in Claim 7 or 8, characterized in that the etchant consists of $O_2$ and molecules which contain halogen atoms.

10. A method as claimed in Claim 9, characterized in that the halogen-containing molecules contain C, F, Cl or S.

11. A method as claimed in Claim 9, characterized in that the halogen-containing molecules are $CF_4$, $C_2F_6$, $C_3F_8$, $C_4F_{10}$, $CCL_3F$, $CCl_2F_2$ or $SOCL_2$.

12. A method as claimed in Claim 9, characterized in that the ratio of oxygen to the other components of the mixtures is between 1:1 and 50:1.

13. A method as claimed in Claim 7 or 8, characterized in that the etching process is carried out at a pressure of 1 to 50 hPa, in particular at a pressure between 10 and 25 hPa.

14. A method as claimed in one of the Claims 7 to 13, characterized in that the plasma is excited by means of a microwave applicator.

15. A method as claimed in Claim 7, characterized in that the relative movement occurs in the direction of the gas flow.

16. A method as claimed in one of the Claims 7 to 15, characterized in that the gas flow is between 10 and 550 sccm.

17. A method as claimed in Claim 7, characterized in that the etchant is supplied upstream near to the plasma and the reaction products are exhausted downstream behind the plasma.

## Revendications

1. Procédé pour la fabrication d'une fibre optique monomode, selon lequel une préforme présentant une zone de noyau photoconductrice centrale, une couche de gaine photoconductrice entourant la zone de noyau et une couche extérieure entourant la couche de gaine est formée, les matériaux de la zone de noyau étant déposés à partir de la phase gazeuse et la couche extérieure étant appliquée sous forme d'un tube sur la couche de gaine photoconductrice, après quoi la fibre photoconductrice monomode est formée par chauffage et tirage, caractérisé en ce que seule une partie de la couche de gaine photoconductrice est déposée à partir de la phase gazeuse et que le reste du matériau de gaine photoconducteur est ajouté sous forme de tube, les faces de soudure étant préalablement traitées par un processus de décapage.

2. Procédé selon la revendication 1, caractérisé en ce qu'au moins le cinquième du matériau de la couche de gaine photoconductrice est déposé à partir de la phase gazeuse.

3. Procédé selon la revendication 1 ou 2, caractérisé en ce qu'un tube en matériau de gaine dopé ou non dopé approprié au guidage de la lumière est utilisé comme couche de substrat pour le dépôt à partir de la phase gazeuse.

4. Procédé selon la revendication 3, caractérisé en ce qu'au moins le cinquième du matériau de la couche de gaine photoconductrice est ajouté sous forme d'un tube servant de couche de substrat.

5. Procédé selon l'une des revendications 1 à 4, caractérisé en ce que le matériau déposé à partir de la phase gazeuse est transformé, le cas échéant, ensemble avec la couche de substrat, en une tige compacte.

6. Procédé selon l'une des revendications 1 à 5, caractérisé en ce que du verte à $SiO_2$ dopé ou non dopé est utilisé pour la couche de gaine photoconductrice.

7. Procédé selon l'une des revendications 1 à 6, caractérisé en ce que les faces de soudure sont décapées avec un décapant gazeux en circulation et une zone de plasma localisée, un déplacement

relatif étant effectué entre les faces de soudure et un dispositif excitant le plasma.

8. Procédé selon l'une des revendications 1 à 6, caractérisé en ce qu'un plasma recouvre entièrement les surfaces de soudure et est temporairement pulsé et qu'un décapant gazeux est amené et évacué de façon permanente ou pulsée.

9. Procédé selon la revendication 7 ou 8, caractérisé en ce que le décapant est constitué par $O_2$ et des molécules contenant des atomes d'halogène.

10. Procédé selon la revendication 9, caractérisé en ce que les molécules contenant de l'halogène contiennent C, F, Cl ou S.

11. Procédé selon la revendication 9, caractérisé en ce que les molécules contenant de l'halogène sont $CF_4$, $C_2F_6$, $C_3F_8$, $C_4F_{10}$, $CCl_3F$, $CCl_2F_2$ ou $SOCl_2$.

12. Procédé selon la revendication 9, caractérisé en ce que le rapport entre l'oxygène et les autres composants du mélange se situe entre 1:1 et 50:1.

13. Procédé selon la revendication 7 ou 8, caractérisé en ce que le processus de décapage est effectué sous une pression de 1 à 50 hPa, notamment sous une pression comprise entre 10 et 25hPa.

14. Procédé selon l'une des revendications 7 à 13, caractérisé en ce que le plasma est excité à l'aide d'un applicateur à micro-ondes.

15. Procédé selon la revendication 7, caractérisé en ce que le déplacement relatif s'effectue dans la direction du gaz en circulation.

16. Procédé selon l'une des revendications 7 à 15, caractérisé en ce que le débit de gaz se situe entre 10 et 550 sccm.

17. Procédé selon la revendication 7, caractérisé en ce que le décapant est amené en amont près du plasma et les produits de réaction sont enlevés par aspiration en aval derrière le plasma.

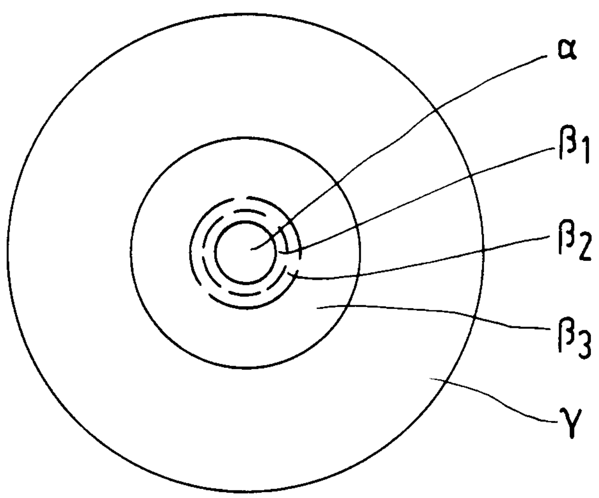
α
β1
β2
β3
γ